# EUROPEAN PATENT SPECIFICATION

(11) **EP 4 119 397 B1**
(45) Date of publication and mention of the grant of the patent: **28.05.2025**
(21) Application number: 22180150.9
(22) Date of filing: 21.06.2022
(51) Int. Cl.: B60R 9/055, F16L 3/26, F16L 55/115

(54) **IMPROVED TUBE-HOLDING DEVICE FOR VEHICLES**
VERBESSERTE ROHRHALTEVORRICHTUNG FÜR FAHRZEUGE
DISPOSITIF DE MAINTIEN DE TUBE AMÉLIORÉ POUR VÉHICULES

(30) Priority: 14.07.2021 IT 202100018572
(43) Date of publication of application: 18.01.2023
(73) Proprietor: Lokhen S.r.l., 70022 Altamura, Bari (IT)
(72) Inventor: BARATTINI, Daniele, 70022 Altamura, Bari (IT); GRECO, Luca Oronzo, 70022 Altamura, Bari (IT)
(74) Representative: Mitola, Marco

(56) References cited:
- WO-A1-2018/031335
- WO-A1-2020/058921
- WO-A1-2021/131323
- DE-A1- 10 250 019
- DE-A1- 2 428 438
- DE-A1- 3 419 430
- GB-A- 2 272 426
- US-A- 5 464 141
- US-B1- 10 286 853

## Description

### FIELD OF APPLICATION

The present invention relates to an improved tube-holding device for vehicles.

### PRIOR ART

As is known, in the field of vehicles, industrial and otherwise, tube-holding devices normally arranged on the roof of the vehicle are used, either directly or through the interposition of luggage rack bars that are in turn attached to the roof of the vehicle.

Said tube-holding devices must have precise technical features in order to withstand the severe conditions to which they are subjected.

First of all, these are containers placed in the open air, on the roof of the vehicle, and therefore they must withstand the weather, ensuring that they remain sealed over time, particularly by preventing possible water infiltration inside of them.

In addition, they must provide considerable mechanical resistance to impact, especially preventing the dispersion of the objects contained therein in the event of severe deceleration of the vehicle to which they are applied (e.g., in the event of collisions or accidents that may involve said vehicle).

Further, these tube-holding devices must be able to provide easy accessibility to their containment compartment in order to allow the objects stored therein to be taken out. Moreover, once access to the containment compartment has been opened by rotating the appropriate closing cover, it is necessary to prevent said closing cover from accidentally closing again, e.g., due to its own weight, by the wind, or even because the vehicle is in a sloping condition, i.e., on a road that is not perfectly flat.

The solutions of the prior art are not able to solve the aforementioned technical problems. Such solutions are disclosed, for example, by GB 2272426 A, which shows a pipe holder device according to the preamble of claim 1, US 5464141 A and DE2428438 A1.

### DISCLOSURE OF THE INVENTION

Thus, there is a need to resolve the cited drawbacks and limitations in reference to the prior art.

This need is satisfied by a tube-holding device according to claim 1.

### DESCRIPTION OF THE DRAWINGS

Further features and advantages of the present invention will be more readily understood from the following description of its preferred and non-limiting examples of embodiments, wherein:

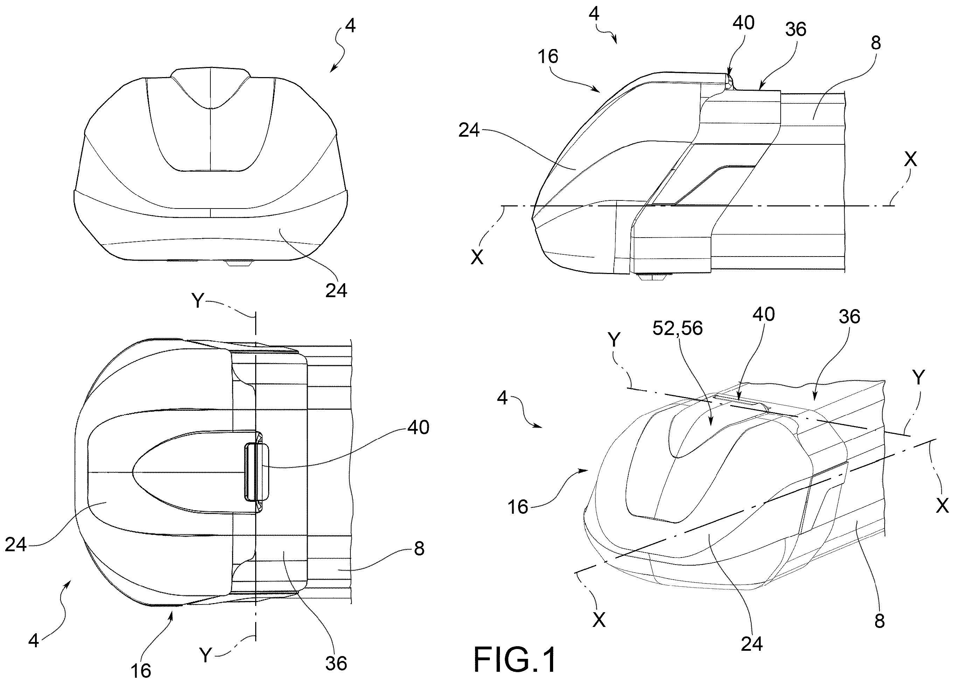

Fig. 1 shows a plurality of views of a front or anterior portion of a tube-holding device according to an embodiment of the present invention with the closing cover in a closed configuration;

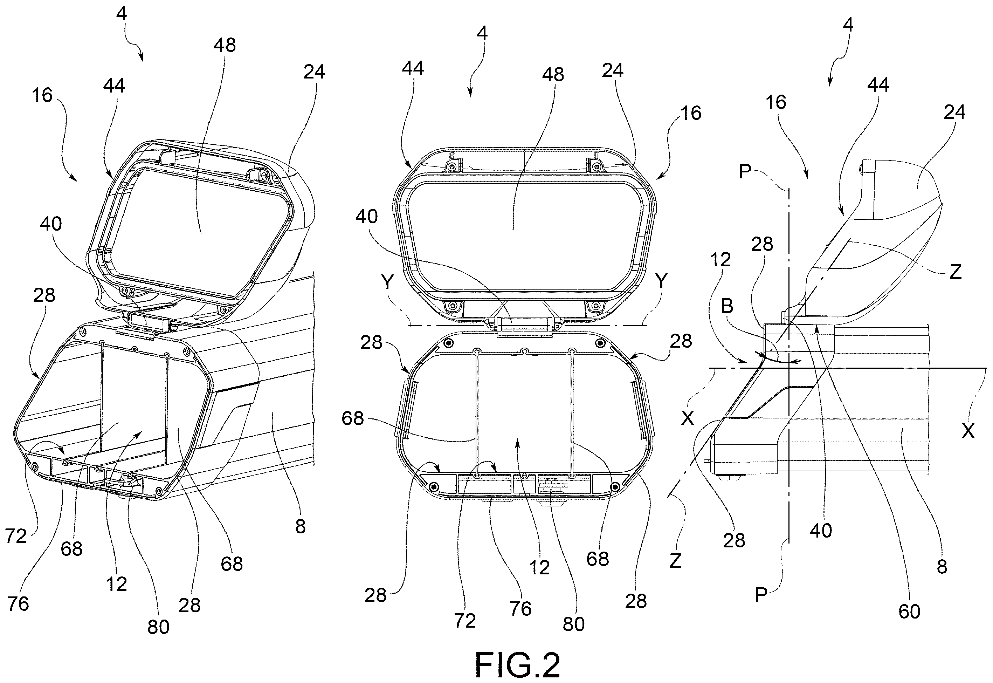

Fig. 2 shows a plurality of views of the front portion of the tube-holding device in Fig. 1 with the closing cover in the open configuration;

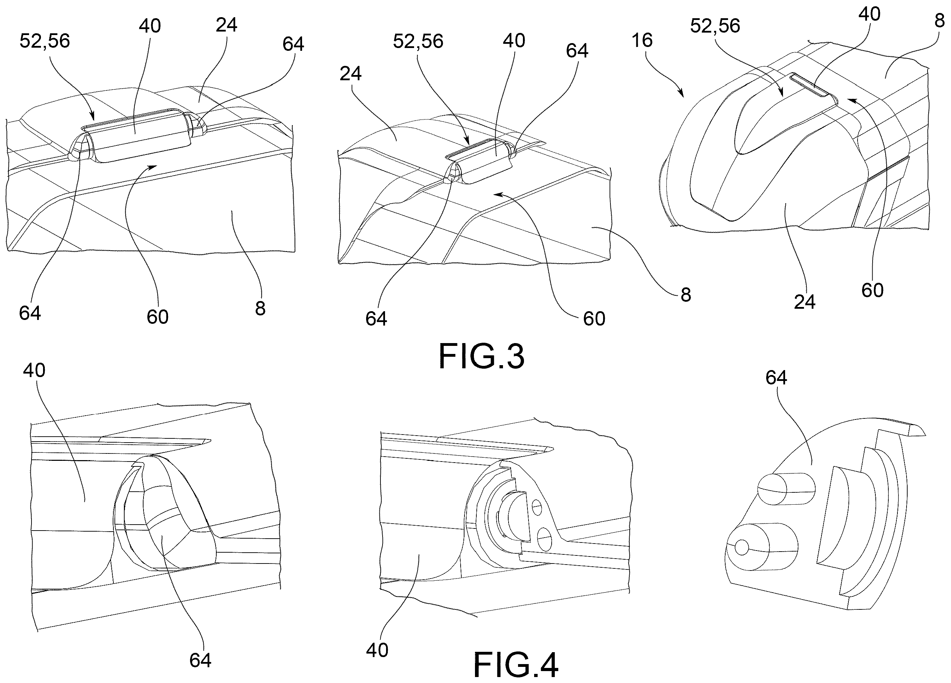

Fig. 3-4 show enlarged details of Fig. 1 and 2;

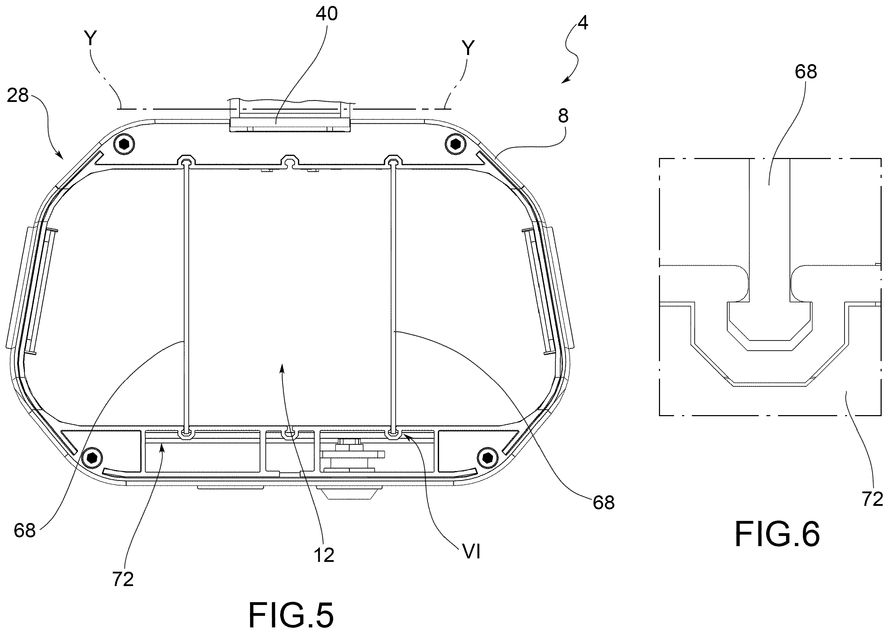

Fig. 5 shows a front view of the device in Fig. 1 with the closing cover in the open configuration;
Fig. 6 shows the enlarged detail VI indicated in Fig. 5;

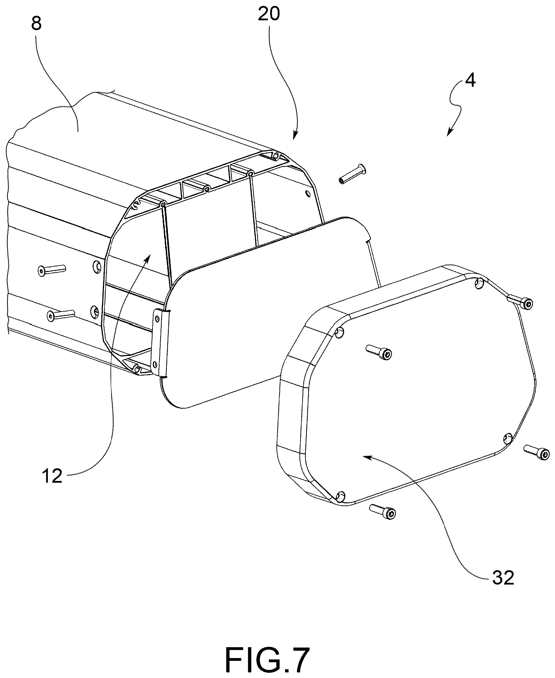

Fig. 7 shows a perspective view of the tube-holding device in Fig. 1, from the side of a rear portion, in an exploded configuration.

The elements or parts of elements common to the embodiments described hereinafter will be indicated with the same reference numerals.

### DETAILED DESCRIPTION

With reference to the aforesaid figures, 4 has been used to collectively denote a tube-holding device for a vehicle comprising a hollow device body 8, enclosing a containment compartment 12 for containing objects.

In particular, the tube-holding device 4 preferably contains elongated objects, such as tubes, but other objects as well. In any case, the type of objects contained in the containment compartment 12 is only indicative and non-restrictive.

The device body 8 may be made of either metal or a plastic/polymer material.

Preferably, the device body 8 extends along a prevailing longitudinal direction X-X from a front end 16 to a rear end 20.

The device body 8 further comprises a closing cover 24, joined to the front end 16, which may be opened to allow access to the containment compartment 12, through a relative access threshold 28.

The device body 8 further comprises a rear closing cap 32 joined to the rear end 20.

The closing cover 24 is hinged at an upper wall 36 of the device body 8, opposite a roof or associated vehicle rack, by at least one upper hinge 40 with a horizontal axis Y-Y, perpendicular to said prevailing longitudinal direction X-X and parallel to said upper wall 36.

The access threshold 28 is at least partially inclined with respect to a vertical plane P, perpendicular to said prevailing longitudinal direction X-X, and passing through said horizontal axis Y-Y of the upper hinge 40.

Preferably, the closing cover 24 comprises a closing edge 44, counter-shaped to said access threshold 28. Due to this shape, the closure of the containment compartment 12 is achieved when the closing cover 24 is returned to the closing configuration by bringing the closing edge 44 of the closing cover 24 into contact with the access threshold 28 of the front end 16 of the device body 8.

According to a possible embodiment, the access threshold 28 lies at least partially on an inclined plane Z that identifies an angle B between 10° and 60° with said vertical plane P, wherein the inclined plane Z and the vertical plane P intersect at the upper hinge 40.

According to a possible embodiment, the access threshold 28 comprises at least a concave or convex portion on the side of the associated closing cover 24.

Preferably, an inner stop wall 48 of the closing cover 24, facing said access threshold 28 and said containment compartment 12, is at least partially counter-shaped to said access threshold 28.

Preferably, a sealing means, such as a rubber gasket, is interposed between the access threshold 28 and the closing cover 24.

It is also possible to envisage that, between the access threshold 28 and the closing cover 24, a male-female type coupling is made at respective perimeter edges.

According to a possible embodiment, the closing cover 24, at a connection portion 52 to the upper hinge 40, comprises a ferromagnetic plate or portion 52 so that it may magnetically engage with a corresponding metal or ferromagnetic plate 56 arranged on the upper wall 36 of the device body 8 when tilted around the upper hinge 40 in the maximum opening position of the closing cover 24. It is clear that if the device body itself is made of a ferromagnetic material, there is no need to add a specific metal plate on said device body. Obviously, the opposing positioning between the magnet and the metal plate, i.e., the arrangement of two magnets attracting each other, also applies.

The upper hinge 40 is preferably fitted with hermetically sealed side closing caps 64.

According to a possible embodiment, the device body 8 is fitted with at least one partition 68 that internally divides the containment compartment 12 into at least two distinct volumes.

Preferably, said at least one longitudinal partition 68 is removable and is attached internally to the device body 8 by means of a track-like coupling.

The device body 8 is fitted with a bottom partition 72, arranged on the opposite side of the top hinge 40, which divides the containment compartment 12 from a locking compartment 76 of the closing cover 24 which houses locking means 80 of the closing cover 24.

Preferably, but not necessarily, the rear closing cap 32 is joined with the rear end 20 by the insertion of a sealing means, such as, for example, a gasket.

The rear closing cap 32, joined with the rear end 20, may be either fixed or openable or removable.

According to a possible variant embodiment, the rear closing cap 32 is configured as the closing cover 24; in other words, it is possible to make a tube-holding device 4 that has similar or identical closing covers 24 at its respective front 16 and rear 20 ends, as described above.

As may be appreciated from that which has been described, the present invention overcomes the drawbacks of the prior art.

First, the present invention allows the device to withstand weather conditions, ensuring that it remains sealed over time, particularly by preventing possible water infiltration therein.

In fact, the tube-holding device is solid, fitted with suitable gaskets, and does not involve through-wall rivets, as in many solutions of the prior art, said through-wall rivets being in fact in the long run the cause of water infiltration.

Moreover, due to the tapering or flaring pattern of the coupling portion between the device body and the closing cover, in the event of shocks or strong deceleration, the objects contained in the containment compartment transfer the impulsive force gradually to the closing cover at distinct instants of time and to different portions of the closing cover. In this way, the impact resistance of the closing cover is improved with respect to the solutions of the prior art.

Therefore, the risk of breakage of the closing cover and related dispersion of the load contained in the tube-holding device is averted.

In addition, the special geometric shape of the closing cover ensures easy accessibility to the containment compartment in order to allow the objects stored therein to be taken out.

Further, once access to the containment compartment has been opened by rotating the closing cover, the closing cover does not tend to close accidentally, due to weight or wind, even if the vehicle is on sloping ground.

In fact, as shown, the closing cover in the fully open condition rotates 180 degrees so that it rests on the upper wall of the device body in a stable and secure position.

Moreover, the use of magnetic stopping means prevents any accidental and unwanted closing of the closing cover.

A person skilled in the art, in order to satisfy contingent and specific needs, may make numerous modifications and variations to the solutions described above.

The scope of protection of the present invention is defined by the following claims.

## Claims

1. Tube-holding device (4) for vehicles comprising
- a hollow device body (8), enclosing a containment compartment (12) for objects, said device body (8) extending in a prevailing longitudinal direction (X-X) from a front end (16) to a rear end (20),
- a closing cover (24), joined to the front end (16), which may be opened so as to allow access to the containment compartment (12), through a relative access threshold (28),
- a rear closure cap (32) joined to the rear end (20),
- wherein the closing cover (24) is hinged at an upper wall (36) of the device body (8), opposite a roof or an associated vehicle luggage rack, by means of at least one upper hinge (40) having a horizontal axis (Y-Y), perpendicular to said prevailing longitudinal direction (X-X) and parallel to said upper wall (36),
- wherein the access threshold (28) is at least partially inclined with respect to a vertical plane (P), perpendicular to said prevailing longitudinal direction (X-X), and passing through said horizontal axis (Y-Y) of the upper hinge (40),
- wherein the closing cover (24) comprises a closing edge (44) counter-shaped with respect to said access threshold (28),
**characterized in that** the device body (8) is provided with a bottom partition (72), placed opposite the upper hinge (40) which divides the containment compartment (12) from a locking compartment (76) of the closing cover (24) housing locking means (80) of the closing cover (24).

2. The tube-holding device (4) according to claim 1, wherein the access threshold (28) lies at least partially on an inclined plane (Z) which identifies with said vertical plane (P) an angle (B) between 10° and 60°, said inclined plane (Z) and vertical plane (P) intersecting at the upper hinge 40().

3. The tube-holding device (4) according to any of the claims 1 to 2, wherein the access threshold (28) comprises at least one concave or convex portion on the side of the associated closing cover (24).

4. The tube-holding device (4) according to any of the claims from 1 to 3, wherein an inner stop wall (48) of the closing cover (24), facing said access threshold (28) and said containment compartment (12), is at least partially counter-shaped with respect to said access threshold (28).

5. The tube-holding device (4) according to any of the claims from 1 to 4, wherein a sealing means is interposed between the access threshold (28) and the closing cover (24).

6. The tube-holding device (4) according to any of the claims from 1 to 5, wherein a male-female type coupling is made between the access threshold (28) and the closing cover (24) at respective perimeter edges.

7. The tube-holding device (4) according to any of the claims from 1 to 6, wherein the closing cover (24), at a connection portion (52) to the upper hinge (40) comprises a ferromagnetic plate or portion (56) so that it may be magnetically coupled to a corresponding metal or ferromagnetic plate (60) placed on the upper wall of the device body (8) when tilted around the upper hinge (40) in the maximum opening position of the closing cover (24) .

8. The tube-holding device (4) according to any of the claims from 1 to 7, wherein the upper hinge (40) is provided with hermetically sealed side closing caps (64).

9. The tube-holding device (4) according to any of the claims from 1 to 8, wherein the device body (8) is provided with at least one longitudinal partition (68) which internally divides the containment compartment into at least two distinct volumes.

10. The tube-holding device (4) according to claim 9, wherein said at least one longitudinal partition (68) is removable and is coupled internally to the device body (8) by means of a rail coupling.

11. The tube-holding device (4) according to any of the claims from 1 to 10, wherein the rear closing cap (64) is associated with the rear end (20) by insertion of a sealing means.

12. The tube-holding device (4) according to any of the claims from 1 to 11, wherein the rear closing cap (32) joined to the rear end (20), may be opened.

13. The tube-holding device (4) according to any of the claims from 1 to 12, wherein the rear closing cap (32) joined to the rear end (20), is configured as the closing cover (24).

## Patentansprüche

1. Rohrhaltevorrichtung (4) für Fahrzeuge, umfassend:
- einen hohlen Vorrichtungskörper (8), welcher einen Eingrenzungsraum (12) für Objekte umgibt, wobei sich der Vorrichtungskörper (8) in einer vorherrschenden longitudinalen Richtung (X-X) von einem vorderen Ende (16) zu einem hinteren Ende (20) erstreckt;
- eine abschließende Abdeckung (24), welche mit dem vorderen Ende (16) verbunden ist, welches geöffnet werden kann, um einen Zugang zu dem Eingrenzungsraum (12) durch eine relative Zugangsschwelle (28) zu ermöglichen,
- eine hintere Verschlusskappe (32), welche mit dem hinteren Ende (20) verbunden ist,
- wobei die abschließende Abdeckung (24) entgegengesetzt zu einem Dach oder einem assoziierten Fahrzeug-Gepäckträger an einer oberen Wand (36) des Vorrichtungskörpers (8) angelenkt ist, mittels wenigstens eines oberen Gelenks (40), welches eine horizontale Achse (Y-Y) aufweist, welche senkrecht zu der vorherrschenden longitudinalen Richtung (X-X) und parallel zu der oberen Wand (36) ist,
- wobei die Zugangsschwelle (28) in Bezug auf eine vertikale Ebene (P), welche senkrecht zu der vorherrschenden longitudinalen Richtung (X-X) ist, wenigstens teilweise geneigt ist und durch die horizontale Achse (Y-Y) des oberen Gelenks (40) verläuft,
- wobei die abschließende Abdeckung (24) einen abschließenden Rand (44) umfasst, welcher in Bezug auf die Zugangsschwelle (28) gegenförmig ist,
**dadurch gekennzeichnet, dass** der Vorrichtungskörper (8) mit einem unteren Abteil (72) bereitgestellt ist, welches entgegengesetzt zu dem oberen Gelenk (40) platziert ist und welches den Eingrenzungsraum (12) von einem Sperrraum (76) der abschließenden Abdeckung (24) teilt, welcher Sperrmittel (80) der abschließenden Abdeckung (24) aufnimmt.

2. Rohrhaltevorrichtung (4) nach Anspruch 1, wobei die Zugangsschwelle (28) wenigstens teilweise auf einer geneigten Ebene (Z) liegt, welche sich mit der vertikalen Ebene (P) bei einem Winkel (B) zwischen 10° und 60° identifiziert, wobei sich die geneigte Ebene (Z) und die vertikale Ebene (P) an dem oberen Gelenk (40) schneiden.

3. Rohrhaltevorrichtung (4) nach einem der Ansprüche 1 bis 2, wobei die Zugangsschwelle (28) an der Seite der assoziierten abschließenden Abdeckung (24) wenigstens einen konkaven oder konvexen Abschnitt umfasst.

4. Rohrhaltevorrichtung (4) nach einem der Ansprüche 1 bis 3, wobei eine innere Stoppwand (48) der abschließenden Abdeckung (24), welche der Zugangsschwelle (28) und dem Eingrenzungsraum (12) zugewandt ist, in Bezug auf die Zugangsschwelle (28) wenigstens teilweise gegenförmig ist.

5. Rohrhaltevorrichtung (4) nach einem der Ansprüche 1 bis 4, wobei ein Dichtungsmittel zwischen der Zugangsschwelle (28) und der abschließenden Abdeckung (24) eingefügt ist.

6. Rohrhaltevorrichtung (4) nach einem der Ansprüche 1 bis 5, wobei eine Kopplung vom männlichen-weiblichen Typ zwischen der Zugangsschwelle (28) und der abschließenden Abdeckung (24) an jeweiligen Umfangsrändern erzeugt ist.

7. Rohrhaltevorrichtung (4) nach einem der Ansprüche 1 bis 6, wobei die abschließende Abdeckung (24) an einem Verbindungsabschnitt (52) zu dem oberen Gelenk (40) eine ferromagnetische Platte oder einen ferromagnetischen Abschnitt (56) umfasst, sodass sie einer entsprechenden metallischen oder ferromagnetischen Platte (60) magnetisch gekoppelt werden kann, welche an der oberen Wand des Vorrichtungskörpers (8) platziert ist, wenn sie in der maximalen Öffnungsposition der abschließenden Abdeckung (24) um das obere Gelenk (40) gekippt wird.

8. Rohrhaltevorrichtung (4) nach einem der Ansprüche 1 bis 7, wobei die obere Abdeckung (40) mit hermetisch abgedichteten seitenabschließenden Kappen (64) bereitgestellt ist.

9. Rohrhaltevorrichtung (4) nach einem der Ansprüche 1 bis 8, wobei der Vorrichtungskörper (8) mit wenigstens einem longitudinalen Abteil (68) bereitgestellt ist, welches den Eingrenzungsraum intern in wenigstens zwei eigene Volumina teilt.

10. Rohrhaltevorrichtung (4) nach Anspruch 9, wobei das wenigstens eine longitudinale Abteil (68) entfernbar ist und intern mittels einer Schienenkopplung mit dem Vorrichtungskörper (8) gekoppelt ist.

11. Rohrhaltevorrichtung (4) nach einem der Ansprüche 1 bis 10, wobei die hintere abschließende Kappe (64) mit dem hinteren Ende (20) durch Einführung eines Dichtungsmittels assoziiert ist.

12. Rohrhaltevorrichtung (4) nach einem der Ansprüche 1 bis 11, wobei die hintere abschließende Kappe (32), welche mit dem hinteren Ende (20) verbunden ist, geöffnet werden kann.

13. Rohrhaltevorrichtung (4) nach einem der Ansprüche 1 bis 12, wobei die hintere abschließende Kappe (32), welche mit dem hinteren Ende (20) verbunden ist, als die abschließende Abdeckung (24) eingerichtet ist.

## Revendications

1. Dispositif de maintien de tube (4) pour véhicules, comprenant
- un corps de dispositif (8) creux enfermant un compartiment de retenue (12) pour des objets, ledit corps (8) s'étendant dans une direction longitudinale prévalante (X-X) d'une extrémité avant (16) à une extrémité arrière (20),
- un couvercle de fermeture (24) attaché à l'extrémité avant (16), qui peut être ouvert afin de permettre l'accès au compartiment de retenue (12) à travers une marche d'accès (28) associée,
- un capot de fermeture arrière (32) attaché à l'extrémité arrière (20),
- dans lequel le couvercle de fermeture (24) est articuléeà une paroi supérieure (36) du corps de dispositif (8), à l'opposé d'un toit ou d'un porte-bagage de véhicule associé, moyennant au moins une charnière supérieure (40) ayant un axe horizontal (Y-Y) perpendiculaire à la direction longitudinale prévalante (X-X) et parallèle à la paroi supérieure (40),
- dans lequel la marche d'accès (28) est au moins partiellement inclinée par rapport à un plan vertical (P) perpendiculaire à la direction longitudinale prévalante (X-X), et passant par ledit axe horizontal (Y-Y) de la charnière supérieure (40),
- dans lequel le couvercle de fermeture (24) comprend un bord de fermeture (44) ayant une forme complémentaire par rapport à la marche d'accès (28),
**caractérisé en ce que** le corps de dispositif (8) est pourvu d'une cloison de fond (72) placée en face de la charnière supérieure (40), qui sépare le compartiment de retenue (12) d'un compartiment de verrouillage (76) du couvercle de fermeture (24) logeant des moyens de verrouillage (80) du couvercle de fermeture (24).

2. Dispositif de maintien de tube (4) selon la revendication 1, dans lequel la marche d'accès (28) est située au moins partiellement sur un plan incliné (Z) qui enferme avec ledit plan vertical (P) un angle (B) entre 10 ° et 60 °, ledit plan incliné (Z) et le plan vertical (P) se croisant à la charnière supérieure (40).

3. Dispositif de maintien de tube (4) selon l'une des revendications 1 à 2, dans lequel la marche d'accès (28) comprend au moins une partie concave ou convexe du côté du couvercle de fermeture (24) associé.

4. Dispositif de maintien de tube (4) selon l'une des revendications 1 à 3, dans lequel une paroi intérieure d'arrêt (48) du couvercle de fermeture (24), en regard de ladite marche d'accès (28) et dudit compartiment de retenue (12), a au moins partiellement une forme complémentaire par rapport à ladite marche d'accès (28).

5. Dispositif de maintien de tube (4) selon l'une des revendications 1 à 4, dans lequel un moyen de jointement étanche est interposé entre la marche d'accès (28) et le couvercle de fermeture (24).

6. Dispositif de maintien de tube (4) selon l'une des revendications 1 à 5, dans lequel un accouplement de type mâle-femelle est réalisé entre la marche d'accès (28) et le couvercle de fermeture (24) à des bords de périmètre respectifs.

7. Dispositif de maintien de tube (4) selon l'une des revendications 1 à 6, dans lequel le couvercle de fermeture (24), à une partie de connexion (52) avec la charnière supérieure (40), comprend une partie ou plaque ferromagnétique (56) de façon qu'il puisse être accouplé magnétiquement à une plaque métallique ou ferromagnétique (60) correspondante placée sur la paroi supérieure du corps de dispositif (8) lorsqu'il est incliné autour de la charnière supérieure (40) dans la position d'ouverture maximale du couvercle de fermeture (24).

8. Dispositif de maintien de tube (4) selon l'une des revendications 1 à 7, dans lequel la charnière supérieure (40) est pourvue de capuchons de fermeture latéraux (64) hermétiquement fermés.

9. Dispositif de maintien de tube (4) selon l'une des revendications 1 à 8, dans lequel le corps de dispositif (8) est pourvu d'au moins une partition longitudinale (68) qui divise le compartiment de retenue à l'intérieur en au moins deux volumes distincts.

10. Dispositif de maintien de tube (4) selon la revendication 9, dans lequel ladite au moins une partition longitudinale (68) peut être enlevée et est fixée à l'intérieur au corps de dispositif (8) moyennant un accouplement de rail.

11. Dispositif de maintien de tube (4) selon l'une des revendications 1 à 10, dans lequel le capot de fermeture arrière **(64)** est associé à l'extrémité arrière (20) par insertion de moyens de jointure étanche.

12. Dispositif de maintien de tube (4) selon l'une des revendications 1 à 11, dans lequel le capot de fermeture arrière (32) attaché à l'extrémité arrière (20) peut être ouvert.

13. Dispositif de maintien de tube (4) selon l'une des revendications 1 à 12, dans lequel le capot de fermeture arrière (32) attaché à l'extrémité arrière (20) est configuré comme le couvercle de fermeture (24).
